# EUROPEAN PATENT SPECIFICATION

(11) **EP 1 076 483 B1**
(45) Date of publication and mention of the grant of the patent: **17.07.2002**
(21) Application number: 99921123.8
(22) Date of filing: 04.05.1999
(51) Int. Cl.: A01G 9/00

(54) **ARTIFICIAL, FLOATING, MOVABLE, TILLABLE SOILS**
KÜNSTLICHER, SCHWIMMENDER ,BEWEGLICHER, BEPFLANZBARER BODEN
SOLS ARTIFICIELS, FLOTTANTS, MOBILES, CULTIVABLES

(30) Priority: 05.05.1998 IT IM980003
(43) Date of publication of application: 21.02.2001
(73) Proprietor: Canina, Aldo, 18038 San Remo (IT); Bertalli, Caterina, 18038 San Remo (IT)
(72) Inventor: Canina, Aldo, 18038 San Remo (IT); Bertalli, Caterina, 18038 San Remo (IT)
(74) Representative: Klausner, Erich
(86) International application number: IT9900114
(87) International publication number: WO9956524

(56) References cited:
- EP-A- 0 173 260
- EP-A- 0 737 418
- DE-A- 2 905 759
- DE-A- 19 541 243

## Description

### Technical Field

My invention relates to farming and particularly to methods that are employed to increase the agricultural production of certain countries by extending their tillable soils. Over the last 50 years breaking up of waste lands and spreading of watering systems allowed people to till soils that were formerly unwatered and to crop more than once every year; moreover increased tillable areas have only partly counterbalanced soils got lost because they have been turned into lands not intended for farming, they have been eroded or deteriorated. In addition, the progressive reduction of tillable soils can't be offset because population is increasing in a few countries and productivity of cultivated lands has stopped since 1990.

### Background Art

Shortage of tillable soils is troubling both people whose arable lands have been progressively reduced by dustbowl and people living in countries that are too small compared with the number of their inhabitants; up to now, all measures adopted to get around the problem suffer the big disadvantage of involving complex hydraulic works and consequently heavy obligations. The worst of it is that people can operate only on their national territory, so farmers will never have the chance to increase their fields unless they are in a position to steal land from the sea (Netherlanders are well-known as the main supporters of this technique). However, certain geomorphologic peculiarities are required for this kind of intervention. It often happens that dams and artificial canals cause a serious change of climate and irreparable damage to the environment as well. Moreover no hydraulic work can prevent a partial waste of water resources: in fact, water dammed into artificial basins and channelled towards barren lands partly evaporates because of the sun and what' s more irrigated fields soak up only a certain percentage of water while the remainder ends by getting lost in the earth more than is absolutely necessary to keep moist the soil. Finally, people settled in waste areas resort to archaic expedients to pump water from the subsoil by capillarity but these ecological methods allow neither a drop in evaporation, nor a total recycling of water resources, nor even an intervention on a large scale.

Document D1, EP 0 173 260 (BECH WERNER) discloses an artificial container for tillable soil, which comprises a buoyant supporting member composed of closed tubes connected to one another, for supporting a substratum to receive plants. The supporting member is formed essentially from parallel tubes which are situated close beside one another and are provided, in the region of their common horizontal diametral plane, with water-repellent sealing means extending longitudinally between the tube outer surfaces. The tube outer surfaces are situated opposite one another and, together with the surfaces of the sealing means, form anchoring wedges for soil which can be planted and is supported, as a substratum, on the supporting member in order to develop the float into a usable island. Moreover, the supporting member comprises raised surrounding walls to bound the soil at the sides.

### Disclosure of Invention

In accordance with the present invention, I provide an artificial, floating, movable soil suitable for countries where lack of fresh water, desertification, environment deterioration have reduced the number of arable lands or where stealing land from the sea is too expensive. They are inflatable, floating, easily transportable modular platform units of 50-100 square metres intended both for fresh water and seawater farmers can join one another to form only one field under cultivation which they will be able to till with traditional farming methods or hydroponics, to work by hand or by certain agricultural machinery, to tow by any boat. Such artificial soil consisting of particular containers one can use in the presence of natural expanses of water or artificial basins and canals (apart from the fact that he has fresh or salt water at his disposal) will give people the possibility of increasing their tillable soils leaving the countries where they reside out of consideration, creating cultivable lands of different sizes, using soils of every kind (soil rich in minerals, clayey ground, peat, etc., depending on what farmers will cultivate), following traditional farming methods or hydroponic farming methods or both, using certain agricultural machinery (engine-driven cultivators, for instance), intervening on a large scale, taking care of their gardens with ease, paying a small sum for ordinary maintenance, covering the cost of repairs without spending much, transporting their agricultural products easily, recycling water resources, curbing evaporation. The standard container intended for fresh water (lakes, rivers, canals, shipways) is an inflated double-bottomed platform consisting of tubular components made up of several internal sections. The diameter of each tubular component is about 65 centimetres. The inner perimeter of each platform measures ten metres by five at least. One can make this special garden by choosing from among three materials: rubberized canvas, synthetic rubber, polyvinyl. The rectangle is provided with an additional flat bottom. Besides making the whole container stiff, it will protect the structure below from agricultural machinery (small-sized engine-driven cultivators, mowing machines, etc.). Farmers can place agrarian earth or infertile substratum on such bottoms. So it will be possible for them to employ both traditional tilling and hydroponics. Watering is assured by a removable sprinkling pipe drawing about 50 centimetres below the optimum load line. It is to be connected to a water pump. In case one should irrigate his fields through electrical water pumps connected to simple siphons, it will be possible for him to use solar energy or Aeolian energy to generate electricity. Only two sides of each platform have been furnished with an assembly system allowing other identical platforms to fit perfectly in the transverse direction as well as in the longitudinal direction so that the size of each artificial field can vary as needed. It' s an overhanging belt consisting of an additional tubular component farmers can furthermore use to walk along the perimeter of each floating field. Every container consists of three main components: platform, side belt, overhanging belt. Each of them is fitted with its own air inflow system based on a main duct connected to only one chief inlet valve; further air ducts, each one linking up with the respective tubular component, lead off the main duct. Containers can be made either from tubular components equipped with one-way inlet valves or tubular components equipped with two-way inlet valves. The former version don' t run the risk of sinking if a few tubular components suffer damage because these don't depend on each other. Moreover people will be in a position to recycle their water resources: whenever they sprinkle a field lying on the dry land, water in excess, or rather water cultivations didn't soak up, usually desperses in the earth; on the contrary, all the containers have been furnished with special outlet pipes discharging surplus water into the same basin from which it has been pumped. In fact, each additional flat bottom is perforeted: every 76 sq.c. there is a hole to which corresponds a sort of funnel fitted in the tubular components functioning as a miniature sewer. Finally, such floating soil is movable: in fact, its tubular components are kept together by simple ropes to which people can fasten any boat by means of an ordinary tow-hook. So, farmers will be able to carry their products by themselves. The covered version of my container is a real floating greenhouse intended for seawater. In that case, *velcro* is the best material to use for providing its transparent synthetic cover with practical, economic fasteners. Such a cover not only makes sure that an optimum microclimate for special cultivations forms inside the container but it also allows seawater to turn into fresh water: during the day the former will evaporate uninterruptedly through a hole in the bottom of the platform; the latter will drip on the crops as soon as seawater condensed because of the high temperature. After trickling down the inner side of the cover, a great quantity of fresh water will certainly gather in the tilled belt running along the inner perimeter of the platform; so, this type of container is to be equipped with proper irrigators. For instance, the cheapest model could be supplied with some strips of cloth meeting at the centre of the field under cultivation: water in excess will be equally divided among the crops when all the rags have become impregnated with it. Both the container intended for fresh water and the container intended for seawater can be towed; otherwise the small-sized ones can be provided with outboard motors, so that farmers are able to deliver their products directly. Moreover, once they have deflated all the tubular components, the facility with which they can carry them is astonishing (containers can be deflated only if their air ducts are furnished with two-way valves). In the end my containers consist of tubular components similar to ones used for manufacturing rubber boats, as well as simple water pipes, air ducts, ropes, strips of cloth, *velcro* fasteners that are on sale everywhere. If farmers use components that are easy to find it seems logical to suppose they can take care of their gardens with ease, pay a small sum for ordinary maintenance, cover the cost of repairs without spending much. Men irrigate dry lands by artificial canals drawing water from springs, lakes, rivers, fossil groundwater tables; it often happens that these water supplies are thousands of kilometres from the future tillable soils. Besides being economical in comparison with this way of watering, my containers allow an intervention on a large scale and protect water below from the sun. Unlike all the traditional hydraulic works, they don' t require a radical change in the geomorphology of the area where people use them and don' t cause any change of climate or damage to the environment; farmers must only move their floating soils by rotation to allow the sunrays to filter through the whole expanse of water they have occupied. Dams and artificial canals can' t get the same result: anyhow they are either in the sun or insufficiently shady, so water they hold is more subject to evaporation.

### Brief Description of Drawings

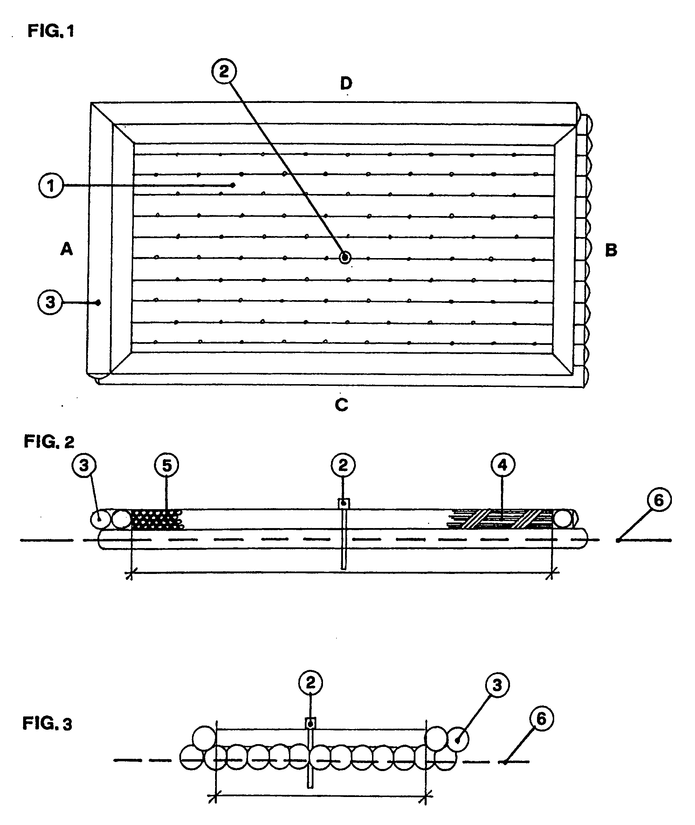

Drawing 1/2 consists of Fig. 1, 2, 3. Fig. 1 is a zenithal representation of a standard container intended for fresh water. It' s an inflated double-bottomed platform (1) consisting of tubular components. Watering is assured by a removable sprinkling pipe (2) connected to a water pump. Only two sides of the rectangle are provided with an overhanging belt (3). Fig. 2 is a longitudinal representation of the same container (side C) pointing out its additional flat bottom on which farmers can place agrarian earth (4) or infertile substratum (5). One sprinkling pipe (2) drawing about 50 centimetres below the optimum load line (6) is enough to allow watering. Fig. 3 shows the side B of the container. Only two sides of each platform (A, D) have been furnished with the aforesaid overhanging belt (3) consisting of an additional tubular component.

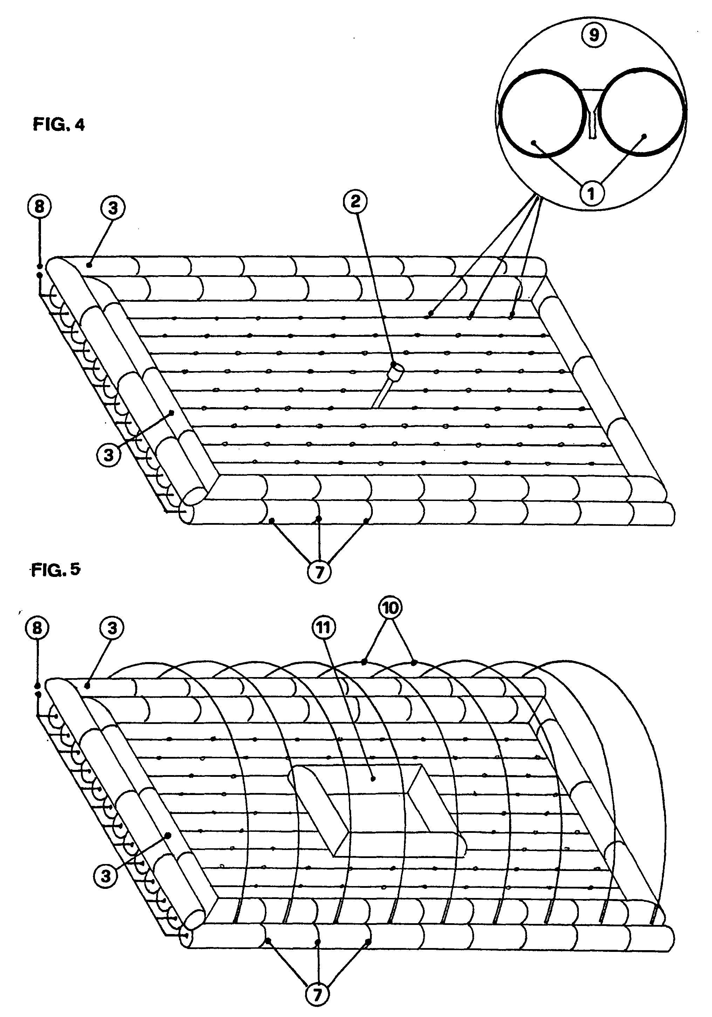

Drawing 2/2 consists of Fig. 4, 5. Fig. 4 shows that tubular components are kept together by simple ropes (7) to which people can fasten any boat by means of an ordinary tow-hook. Platform, side belt, overhanging belt are fitted with their own air inflow systems based on a main duct connected to only one chief inlet valve; further air ducts (8), each one linking up with the respective tubular component, lead off the main duct. Special outlet pipes discharge surplus water into the same basin from which it has been pumped In fact, each additional flat bottom is perforeted: every 76 sq.c. there is a hole to which corresponds a sort of funnel functioning as a miniature sewer. The figure shows in detail how every funnel is to be fitted in the tubular components (9). Fig. 5 shows the covered version of my container intended for seawater. Its transparent synthetic cover (10) not only makes sure that an optimum microclimate for special cultivations forms inside the container but it also allows seawater to turn into fresh water: during the day the former will evaporate uninterruptedly through a hole in the bottom of the platform (11); the latter will drip on the crops as soon as seawater condensed because of the high temperature.

### Best mode for carrying out the invention

From the technical point of view my artificial floating soils are to be manufactured by employing the same process used by firms manufacturing rubber boats.

### Industrial applicability

Chiefly food industry that is connected with agricultural production.

## Claims

1. An artificial, floating, movable, container for tillable soil being able to increase the agricultural production of certain countries, to get around the problem of shortage of tillable soils troubling both people whose arable lands have been progressively reduced by dustbowl and people living in countries that are too small compared with the number of their inhabitants, to avoid complex hydraulic works and consequently heavy obligations, that is comprising: a floating container consisting of inflatable, floating, easily transportable modular platform units, or rather a platform (1), a side belt, an overhanging belt (3) consisting of an additional tubular component farmers can furthermore use to walk along the perimeter of each floating field **characterized in that** said platform (1), said side belt and said overhanging belt (3) consist of tubular elements that are made of rubberized canvas, synthetic rubber, polyvinyl, and kept together by simple ropes (7); said container for tillable soil further comprising an air inflow system based on a main duct connected to only one chief inlet valve while further air ducts (8), each one linking up with the respective tubular component, lead of the main duct; and a removable sprinkling pipe (2) drawing about 50 centimetres below the optimum load line (6), that is to be connected to a water pump to assure watering; an additional flat bottom of said platform (1) on which people can place soils of every kind, namely soil rich in minerals, clayey ground, peat, and other soils; said platform being adapted to fit perfectly to other identical platforms in the transverse direction as well as in the longitudinal direction so that the size of each artificial field can vary as needed.

2. The artificial, floating, movable, container for tillable soil of claim 1 **characterized in that**: being floating it's intended both for fresh and seawater a part from the fact that people have natural expanses of water or artificial basins and canals at their disposal, it allows farmers to increase their tillable soils leaving the countries where they reside out of consideration, it can make up for all shortcomings of techniques that have been employed up to now depending on which people can operate only on their national territory so farmers will never have the chance to increase their fields unless they are in a position to steal land from the sea, but stealing land from the sea is a kind of intervention that requires certain geomorphologic peculiarities.

3. The artificial, floating, movable, container for tillable soil of claim 1 **characterized in that**: it allows recycling of water resources because it has been furnished with special outlet pipes discharging surplus water into the same basin from which it has been pumped, while watering is assured by pumping fresh water or condensing salt water on which the artificial soil is floating; in fact, each additional flat bottom of said platform (1) is perforated: every 76 sq.c. there is a hole to which corresponds a sort of funnel fitted in the tubular components functioning as a miniature sewer.

4. The artificial, floating, movable, container for tillable soil of claim 1 **characterized in that**: being floating it protects water below from the sun curbing evaporation while dams and artificial canals can' t get the same result; anyhow they are either in the sun or insufficiently shady, so water they hold is more subject to evaporation.

5. The artificial, floating, movable, container for tillable soil of claim 1 **characterized in that**: unlike all the traditional hydraulic works it doesn' t cause any change of climate or damage to the environment because it doesn' t require a radical change in the geomorphology of the area where people use it, it preserves water resources by preventing they from despersing in the earth or evaporating, farmers must only move their floating soils by rotation to allow the sunrays to filter through the whole expanse of water they have occupied.

6. The artificial, floating, movable, container for tillable soil of claim 1 **characterized in that**: it consist of tubular components similar to ones used for. manufacturing rubber boats, as well as simple water pipes, air ducts, ropes, strips of cloth, *velcro* fasteners that are on sale everywhere, so farmers can take care of their gardens with ease, pay a small sum for ordinary maintenance, cover the cost of repairs without spending much.

7. The artificial, floating, movable, container for tillable soil of claim 1 **characterized in that**: if it's made from tubular components equipped with one-way inlet valves, it doesn't run the risk of sinking if a few tubular components suffer damage because these don't depend on each other.

8. The artificial, floating, movable, container for tillable soil of claim 1 **characterized in that**: its tubular components are kept together by simple ropes (8) to which people can fasten any boat by means of an ordinary tow-hook or it can be provided with an outboard motor, so farmers will be able to deliver their products by themselves.

9. The artificial, floating, movable, container for tillable soil of claim 1 **characterized in that**: people can fill it with soils of every kind, such as soil rich in minerals, clayey ground, peat, etc., and other soils so traditional farming methods or hydroponic farming methods or both are allowed.

10. The artificial, floating, movable, container for tillable soil of claim 1 **characterized in that**: only two sides of each platform (1) are fitted with an assembly system consisting of an overhanging belt (3) made from an additional tubular component allowing other identical platforms to fit perfectly in the transverse direction as well as in the longitudinal direction so that the size of each artificial field can vary as needed while farmers can furthermore use the aforesaid overhanging belt to walk along the perimeter of their field.

11. The artificial, floating, movable, container for tillable soil of claim 1 **characterized in that**: it's provided with an additional flat bottom that besides making the whole container stiff will protect the structure below from agricultural machinery such as small-sized engine-driven cultivators, mowing machines.

12. The artificial, floating, movable, container for tillable soil of claim 1 **characterized in that**: its covered version is a real floating greenhouse intended for sea water because the transparent cover (10) not only makes sure that an optimum microclimate for special crops forms inside the container but it also allows sea water to turn into fresh water; during the day the former will evaporate uninterruptedly through a hole in the bottom of the platform; the latter will drip on the crops as soon as seawater condensed because the high temperature.

## Patentansprüche

1. Künstlicher, schwimmender, beweglicher Behälter für bestellbare Erde, der in der Lage ist, die landwirtschaftliche Erzeugung bestimmter Länder zu steigern, um das Problem des Mangels an bestellbarer Erde, das sowohl die Menschen betrifft, deren bestellbares Land zunehmend durch Sandstaub und Dürre vermindert wurde, als auch diejenigen, die in Ländern wohnen, die im Verhältnis zu ihrer Bevölkerungszahl zu klein sind, um komplexe wassertechnische Anlagen und in der Folge schwere Verbindlichkeiten zu verhindern, bestehend aus: einem schwimmenden Behälter, der aus aufblasbaren, schwimmenden, leicht transportierbaren und zusammensetzbaren Plattformeinheiten besteht, bzw. bevorzugt aus einer Plattform (1), einem seitlichen Gürtel, einem überstehenden Gürtel (3), bestehend aus einem zusätzlichen schlauchförmigen Teil, den die Landwirte ausserdem benutzen können, um entlang der Umfangslinie eines jeden schwimmenden Feldes gehen zu können, **dadurch gekennzeichnet, dass** die Plattform (1), der seitliche Gürtel und der überhängende Gürtel (3) aus schlauchförmigen Elementen bestehen, die aus gummiertem Gewebe, synthetischem Gummi, Polyvinyl hergestellt sind und durch einfache Seile (7) zusammengehalten werden; der Behälter für bestellbare Erde besteht weiterhin aus einem Lufteinlasssystem, das sich auf eine Hauptleitung stützt, die mit nur einem Haupteinlassventil verbunden ist, während weitere Luftleitungen (8), die jeweils mit den entsprechenden schlauchförmigen Elementen verbunden sind, von der Hauptleitung abzweigen sowie aus einem abnehmbaren Bewässerungsrohr (7), das etwa 50 Zentimeter unter der optimalen Ladelinie (6) tiefgeht und an eine Wasserpumpe angeschlossen ist, um die Bewässerung zu sichern und einem zusätzlichen flachen Unterteil der Plattform (1), auf das man jede Art von Boden, insbesondere mineralhaltige Erde, Lehmboden, Torf und andere Bodenarten füllen kann; die Plattform ist so ausgelegt, dass sie perfekt mit anderen, gleichartigen Plattformen sowohl in Querrichtung als auch in Längsrichtung verbunden werden kann, wodurch die Größe eines jeden künstlichen Feldes je nach Anforderung verändert werden kann.

2. Künstlicher, schwimmender, beweglicher Behälter für bestellbare Erde nach Anspruch 1, **dadurch gekennzeichnet, dass** er sowohl auf Süssals auch Meerwasser schwimmen kann, abgesehen davon, dass natürliche Wasserflächen oder künstliche Becken und Kanäle zu Verfügung stehen und damit den Landwirten ermöglicht wird, ihren bestellbaren Boden zu vermehren, wobei dem Land, auf dem sie angesiedelt sind, keine Beachtung geschenkt wird; er kann allen Mängeln der Techniken abhelfen, die bisher eingesetzt wurden und die davon abhängen, dass nur auf dem jeweiligen nationalen Gebiet gearbeitet werden kann und Landwirte deshalb nie die Gelegenheit haben werden, ihre Felder zu vergrößern, ausser wenn sie sich in einem Gebiet befinden, in dem sie dem Meer Land abgewinnen können, dem Meer Land abzugewinnen ist jedoch eine Art von Eingriff, der bestimmte geomorphologische Merkmale voraussetzt.

3. Künstlicher, schwimmender, beweglicher Behälter für bestellbare Erde nach Anspruch 1, **dadurch gekennzeichnet, dass** er die Wiederaufbereitung von Wasserressourcen ermöglicht, da er mit speziellen Abflussleitungen ausgestattet ist, die den Wasserüberschuss in dasselbe Becken ableiten, aus dem es gepumpt wurde, während die Bewässerung durch das Pumpen von dem Süsswasser oder kondensiertem Salzwasser, auf dem der künstliche Boden schwimmt, gesichert wird; tatsächlich ist jeder zusätzliche flache Körper der Plattform (1) perforiert: alle 76 Quadaratzentimenter befindet sich ein Loch, dem eine Art Trichter entspricht, welcher in die schlauchförmigen Elemente eingeführt ist und damit als kleiner Abfluss dient.

4. Künstlicher, schwimmender, beweglicher Behälter für bestellbare Erde nach Anspruch 1, **dadurch gekennzeichnet, dass** dadurch, dass er schwimmend ist, das darunter befindliche Wasser vor Verdunstung durch Sonneneinstrahlung geschützt wird, während Dämme und künstliche Kanäle nicht dasselbe Ergebnis erzielen können; allenfalls befinden sie sich entweder in der Sonne oder nur unzulänglich im Schatten und das Wasser, das sie enthalten, ist eher der Verdunstung ausgesetzt.

5. Künstlicher, schwimmender, beweglicher Behälter für bestellbare Erde nach Anspruch 1, **dadurch gekennzeichnet, dass** er, anders als alle traditionellen wassertechnischen Anlagen, keine klimatischen Veränderungen oder Umweltschäden bewirkt, da er keine tiefgehende Veränderung der Geomorphologie des Gebietes, in dem er eingesetzt wird, voraussetzt; er bewahrt Wasserressourcen, indem er verhindert, dass sie im Boden versickern oder verdunsten; die Landwirte müssen lediglich ihre schwimmenden Felder rotieren, um den Sonnenstrahlen zu ermöglichen, durch die gesamte, felderbedeckte Wasserfläche zu filtern.

6. Künstlicher, schwimmender, beweglicher Behälter für bestellbare Erde nach Anspruch 1, **dadurch gekennzeichnet, dass** er aus schlauchförmigen Teilen besteht, die denjenigen ähneln, die zur Herstellung von Schlauchbooten bzw. einfachen Wasserleitungen, Luftleitungen, Seilen, Kleiderbändern, Klettverschlüssen benutzt werden, die überall verkauft werden; auf diese Weise können Landwirte problemlos ihren Garten besorgen, einen kleinen Betrag für die normale Pflege bezahlen und die Reparaturkosten niedrig halten.

7. Künstlicher, schwimmender, beweglicher Behälter für bestellbare Erde nach Anspruch 1, **dadurch gekennzeichnet, dass** er aus schlauchförmigen, mit Einweg-Ventilen ausgestatteten Teilen besteht und deshalb nicht die Gefahr besteht, dass er sinkt, wenn einige schlauchförmige Teile beschädigt sind, da sie nicht voneinander abhängig sind.

8. Künstlicher, schwimmender, beweglicher Behälter für bestellbare Erde nach Anspruch 1, **dadurch gekennzeichnet, dass** die schlauchförmigen Teile durch einfache Seile (8) zusammengehalten werden, an denen Boote durch normale Anlegehaken befestigt werden können oder sie können mit einem Aussenbordmotor ausgestattet werden, wodurch die Landwirte in der Lage sind, ihre Erzeugnisse selbst auszuliefern.

9. Künstlicher, schwimmender, beweglicher Behälter für bestellbare Erde nach Anspruch 1, **dadurch gekennzeichnet, dass** er mit jeder Art von Boden, wie etwa mineralhaltiger Erde, Lehmboden, Torf und andere Bodenarten gefüllt werden kann und sowohl traditionelle als auch hydrophone Anbaumethoden möglich sind.

10. Künstlicher, schwimmender, beweglicher Behälter für bestellbare Erde nach Anspruch 1, **dadurch gekennzeichnet, dass** nur zwei Seiten jeder Plattform (1) mit einem Verbindungssystem versehen sind, das aus einem überhängenden Gürtel (3) besteht, der aus einem zusätzlichen schlauchförmigen Teil besteht und ermöglicht, dass sie perfekt mit anderen, gleichartigen Plattformen sowohl in Querrichtung als auch in Längsrichtung verbunden werden kann, wodurch die Größe eines jeden künstlichen Feldes je nach Anforderung verändert werden kann, während die Landwirte ausserdem auf dem besagten überhängenden Gürtel entlang der Umfangslinie ihres Feldes gehen können.

11. Künstlicher, schwimmender, beweglicher Behälter für bestellbare Erde nach Anspruch 1, **dadurch gekennzeichnet, dass** er mit einem zusätzlichen flachen Körper ausgestattet ist, der den ganzen Behälter nicht nur versteift, sondern auch die untere Struktur vor landwirtschaftlichen Maschinen, wie z.B. Motorhacken, Rasenmäher schützt.

12. Künstlicher, schwimmender, beweglicher Behälter für bestellbare Erde nach Anspruch 1, **dadurch gekennzeichnet, dass** seine überdachte Ausführung ein echtes schwimmendes Treibhaus für Meerwasser darstellt, denn die durchsichtige Abdeckung (10) sichert nicht nur, dass sich im Behälter ein optimales Mikroklima für spezielle Samenarten formt, sondern ermöglicht auch, dass Meerwasser in Süsswasser umgewandelt wird; tagsüber verdunstet ersteres ununterbrochen durch ein Loch im Körper der Plattform; zweiteres wird dann auf die Samen tropfen, sobald das Meerwasser auf Grund der hohen Temperatur verdunstet ist.

## Revendications

1. Conteneur artificiel, flottant, mobile pour sol cultivable, pouvant augmenter la production agricole de certains pays, afin de résoudre le problème de manque de sols cultivables dont souffrent des peuples dont les terres arables ont été réduites progressivement par le désert, et des peuples vivant dans des pays qui sont trop petits par rapport au nombre de leurs habitants, pour éviter des travaux hydrauliques complexes et par conséquent des obligations lourdes, qui comporte
un conteneur flottant constitué d'unités formant plate-forme modulaire gonflable, flottante, pouvant facilement être transportée, ou plutôt une plate-forme (1), une ceinture latérale, une ceinture en surplomb (3) constituée d'un composant tubulaire supplémentaire que les fermiers peuvent de plus utiliser pour marcher le long du périmètre de chaque champ flottant, **caractérisé en ce que** ladite plate-forme (1), ladite ceinture latérale et ladite ceinture en surplomb (3) sont constituées d'éléments tubulaires qui sont fabriqués en toile caoutchoutée, en caoutchouc synthétique, en polyvinyle, et maintenues ensemble par de simples câbles (7), ledit conteneur pour un sol cultivable comportant de plus un système d'entrée d'air basé sur un conduit principal connecté à une seule soupape d'admission directrice, tandis que des conduits d'air supplémentaires (8), chacun étant relié au composant tubulaire respectif, mènent au conduit principal, et un tuyau de pulvérisation amovible (2) s'étendant environ 50 cm en dessous de la ligne de charge optimum (6), qui doit être connecté à une pompe à eau pour garantir une alimentation en eau, un fond plat supplémentaire de ladite plate-forme (1) sur lequel des personnes peuvent placer des sols de tout type, c'est-à-dire des sols riches en minéraux, des sols argileux, de la tourbe et d'autres sols, ledit fond plat étant adapté pour s'agencer parfaitement sur d'autres plates-formes identiques dans la direction transversale de même que dans la direction longitudinale, de sorte que la dimension de chaque champ artificiel peut varier si nécessaire.

2. Conteneur artificiel, flottant, mobile pour sol cultivable selon la revendication 1, **caractérisé en ce qu'**étant prévu pour flotter à la fois sur de l'eau douce et sur de l'eau de mer, à l'exception du fait où les personnes ont des étendues d'eau naturelles ou des bassins artificiels et des canaux à leur disposition, il permet aux fermiers d'augmenter leurs sols cultivables en laissant les pays où ils résident hors de considération, il peut s'accommoder de tous les inconvénients des techniques qui ont été utilisées jusqu'à présent par les personnes pouvant agir uniquement sur leur territoire national, de sorte que les fermiers ne vont jamais avoir la possibilité d'augmenter leur domaine, à moins qu'ils soient en position d'irriguer une terre à partir de la mer, mais l'irrigation d'une terre à partir de la mer est un type d'intervention qui nécessite certaines particularités géomorphologiques.

3. Conteneur artificiel, flottant, mobile pour sol cultivable selon la revendication 1, **caractérisé en ce qu'**il permet le recyclage de ressources en eau de par le fait qu'il a été muni de tuyaux de sortie spéciaux évacuant le surplus d'eau dans le même bassin à partir duquel elle a été pompée, tandis que l'alimentation en eau est garantie par pompage d'eau douce ou d'eau salée de condensation sur laquelle flotte le sol artificiel, chaque fond plat supplémentaire de ladite plate-forme étant en fait perforé, tous les 76 cm en carré, d'un trou qui correspond à une sorte d'entonnoir agencé dans le composants tubulaires fonctionnant comme un égout miniature.

4. Conteneur artificiel, flottant, mobile pour sol cultivable selon la revendication 1, **caractérisé en ce que**, de par le fait qu'il flotte, il protège l'eau située sous celui-ci de l'évaporation solaire, tandis que des digues et canaux artificiels ne peuvent pas donner le même résultat, qu'ils soient toujours au soleil ou à une ombre insuffisante, de sorte que l'eau qui est située sous ceux-ci est plus susceptible d'évaporation.

5. Conteneur artificiel, flottant, mobile pour sol cultivable selon la revendication 1, **caractérisé en ce que** contrairement à tous les travaux hydrauliques habituels, il ne provoque pas une modification quelconque du climat, ni ne détériore l'environnement, de par le fait qu'il ne nécessite pas un changement radical de géomorphologie de la surface où on l'utilise, il préserve les ressources en eau en les empêchant de se disperser dans la terre ou de s'évaporer, les fermiers devant seulement déplacer leurs sols flottants par rotation pour permettre aux rayons du soleil de filtrer à travers toute l'étendue d'eau qu'ils occupent.

6. Conteneur artificiel, flottant, mobile pour sol cultivable selon la revendication 1, **caractérisé en ce qu'**il est constitué de composants tubulaires similaires à ceux utilisés pour la fabrication de bateaux en caoutchouc, de même que de simples tuyaux d'eau, conduits d'air, cordes, bandes de tissu, fixations Velcro (nom commercial déposé) qui sont en vente n'importe où, de sorte que les fermiers peuvent facilement prendre soin de leurs jardins, payer une petite somme pour un entretien ordinaire, couvrir le coût des réparations sans dépenser trop.

7. Conteneur artificiel, flottant, mobile pour sol cultivable selon la revendication 1, **caractérisé en ce que** s'il est réalisé à partir de composants tubulaires munis de soupapes d'admission à une voie, il ne court pas le risque de s'affaisser si quelques composants tubulaires souffrent d'une détérioration de par le fait qu'ils ne dépendent pas les uns des autres.

8. Conteneur artificiel, flottant, mobile pour sol cultivable selon la revendication 1, **caractérisé en ce que** ses composants tubulaires sont maintenus ensemble par de simples câbles (8) auxquels on peut fixer un bateau quelconque par l'intermédiaire d'un crochet de remorquage ordinaire, ou **en ce qu'**il peut être muni d'un moteur extérieur, de sorte que les fermiers vont pouvoir acheminer leurs produits eux-mêmes.

9. Conteneur artificiel, flottant, mobile pour sol cultivable selon la revendication 1, **caractérisé en ce qu'**on peut le remplir avec des sols de tout type, comme un sol riche en minéraux, un sol argileux, de la tourbe, etc., et d'autres sols, de sorte que des procédés de culture traditionnels ou des procédés de culture hydroponiques ou les deux sont autorisés.

10. Conteneur artificiel, flottant, mobile pour sol cultivable selon la revendication 1, **caractérisé en ce que** seuls deux côtés de chaque plate-forme (1) sont munis d'un système d'assemblage constitué d'une ceinture en surplomb (3) fabriquée à partir d'un composant tubulaire supplémentaire permettant à d'autres plates-formes identiques de s'agencer parfaitement dans la direction transversale de même que dans la direction longitudinale, de sorte que la dimension de chaque champ artificiel peut varier si nécessaire, tandis que les fermiers peuvent de plus utiliser la ceinture en surplomb mentionnée ci-dessus pour se déplacer le long du périmètre de leur champ.

11. Conteneur artificiel, flottant, mobile pour sol cultivable selon la revendication 1, **caractérisé en ce qu'**il est muni d'un fond plat supplémentaire qui en plus de rendre tout le conteneur rigide, va protéger la structure située en dessous de celui-ci de machines agricoles, telles que des motoculteurs entraînés par moteur de petite taille, des semoirs.

12. Conteneur artificiel, flottant, mobile pour sol cultivable selon la revendication 1, **caractérisé en ce que** sa version recouverte est un réel jardin flottant prévu pour de l'eau de mer, de par le fait que le recouvrement transparent (10) garantit non seulement un microclimat optimum pour des formes de cultures spéciales à l'intérieur du conteneur, mais permet également à l'eau de mer de se transformer en eau douce, la première s'évaporant de manière ininterrompue pendant la journée à travers un trou situé dans le fond de la plate-forme, la dernière tombant sur les récoltes dès que l'eau de mer s'est condensée de par le fait de la température élevée.
